# EUROPEAN PATENT SPECIFICATION

(11) **EP 3 779 044 B1**
(45) Date of publication and mention of the grant of the patent: **01.11.2023**
(21) Application number: 18914590.7
(22) Date of filing: 21.09.2018
(51) Int. Cl.: E01B 26/00, B61F 7/00, B61H 11/00

(54) **GROUND GAUGE CHANGING APPARATUS FOR GAUGE-CHANGEABLE WHEELSET**
BODENSPURWECHSELVORRICHTUNG FÜR SPURWECHSELBARE RADSÄTZE
APPAREIL DE VARIATION D'ÉCARTEMENT AU SOL POUR ESSIEU MONTÉ À ÉCARTEMENT VARIABLE

(30) Priority: 13.04.2018 CN 201810333101
(43) Date of publication of application: 17.02.2021
(73) Proprietor: CRRC QINGDAO SIFANG CO., LTD., Chengyang District Qingdao Shandong 266111 (CN)
(72) Inventor: CHEN, Shuo, Qingdao, Shandong 266111 (CN); LI, Zhongwen, Qingdao, Shandong 266111 (CN); WANG, Xu, Qingdao, Shandong 266111 (CN); QIAO, Qingfeng, Qingdao, Shandong 266111 (CN); YU, Dahai, Qingdao, Shandong 266111 (CN)
(74) Representative: Dilg, Haeusler, Schindelmann Patentanwaltsgesellschaft mbH
(86) International application number: PCT/CN2018/106981
(87) International publication number: WO 2019/196344

(56) References cited:
- CH-A- 460 076
- CN-A- 1 232 105
- CN-A- 102 076 544
- CN-A- 107 574 728
- CN-A- 107 628 055
- CN-A- 108 407 840
- CN-A- 108 515 979
- DE-A1- 19 817 950
- FR-A- 1 547 606
- JP-A- 2000 108 901

## Description

### CROSS-REFERENCE TO RELATED APPLICATION

The present application claims priority to Chinese Application No. 2018103331019 filed on April 13, 2018, entitled "Ground Gauge-changing Facility for Gauge-Changing Wheelset" .

### FIELD OF TECHNOLOGY

The present invention relates to the technical field of rail vehicle gauge change, in particular to a ground gauge-changing facility for a gauge-changing wheelset.

### BACKGROUND

Currently, in order to meet the transportation requirements between rails with different gauges in neighboring countries, bogies with different distances between backs of the wheel flanges are generally replaced at the border with other countries, but such solution is costly and time-consuming. Hence, gauge-changing bogies have been invented in Spain and then in Japan to enable continuous running of trains on rails with different gauges; and correspondingly, ground gauge-changing facilities are provided, such that the gauge is automatically changed when the gauge-changing bogie passes through the ground gauge-changing facility.

However, when a train passes through an existing ground gauge-changing facility, it directly enters a gauge-changing section after passing through an unlocking section, neither a detection method to determine whether the unlocking is successful, nor emergency measures to deal with unlocking failure has been presented. If the unlocking fails, and the train directly enters the gauge-changing section, it will cause damage to the gauge-changing wheelset and result in heavy losses. Correspondingly, there is no detection method to determine whether the train is normally locked after entering a locking section, and no emergency measures to deal with locking failure. As a result, the current ground gauge-changing facilities may have serious risk on safety. FR1547606A relates to a fixed installation, allowing running trains to change track width; the change of track width is symmetrical with respect to the vertical and axial plane common to the terminal parts of the tracks with different spacing, the guide and support elements are arranged to be placed in the intermediate space adjacent to the ends of the rails and the guide and support elements comprise displacement surfaces, constituted by bases on which lies the displacement and support means integral with the bogies; guide means or counter rails, to guide the wheels in the transversal direction when these wheels have stopped contacting with the corresponding rails located in the existing space between the ends of the rails with tracks of different spacing and means actuating locking devices arranged on the bogies. DE19817950A1 relates to a monitoring device for automatic rail track wide changing and the monitoring device uses detectors at the entry and exit to the track width changing point with sensors for detecting which wheel set is locked in position and additional wheel sensors providing signals used for calculating the velocity of the passing vehicle and the number of wheel axles. CH460076A relates to Railway installation, characterized in that it comprises: on the one hand, vehicles with rolling axles of at least two different kinds, corresponding to different track widths, the position in height of one kind of axles at least being capable of being modified with respect to the vehicle, these positions being ensured before and after mutation by a locking device; and on the other hand, a section of maneuvering tracks, a section in which at least two tracks with different spacing are mounted one inside another, the change of the positions of the axles, the higher one being at rest and the lower being at rolling, being taken place by the relative variation of the level of the different tracks, in the maneuvering section, variation causing finally and relatively the axle to be raised for being taken out of service and to be lowered for being put into action.

### SUMMARY

### (I) Technical problems to be solved

An embodiment of the present invention aims to solve at least one of the technical problems in the prior art or related technologies.

One of the embodiments of the present invention provides a ground gauge-changing facility for a gauge-changing wheelset, to facilitate emergency braking once the train fails to be unlocked or locked, and to eliminate potential safety hazards in the existing ground gauge-changing facilities.

### (II) Technical solutions

In order to solve the technical problems above, one of the embodiments of the present invention provides a ground gauge-changing facility for a gauge-changing wheelset, comprising a pair of support rails provided in parallel, and a pair of first guide rails, a pair of gauge-changing guide rails, and a pair of second guide rails provided in sequence along interior sides of the pair of support rails; an unlocking section is provided between each of the first guide rails and each of the gauge-changing guide rails, and an unlocking emergency braking section is provided behind the unlocking section; a locking section is provided between each of the gauge-changing guide rails and each of the second guide rails, and a locking emergency braking section is provided behind the locking section.

Unlocking state monitoring devices are provided proximal to an end of the unlocking section, and locking state monitoring devices are provided proximal to an end of the locking section.

The unlocking state monitoring devices are respectively disposed inside the pair of the support rails opposite to the end sections of the unlocking sections, and the locking state monitoring devices are respectively disposed inside the pair of the support rails opposite to the end sections of the locking sections.

In an embodiment of the present invention, the gauge-changing bogie is provided with a gauge-changing wheelset including wheels, an axle, and locking mechanisms; the wheels are respectively provided at both ends of the axle, and are connected with the axle through splines; the locking mechanisms are respectively provided on exterior sides of the wheels and located in an axle-box body at both ends of the axle; the locking mechanisms are connected with the wheels, and the wheels are unlocked and locked by the locking mechanisms to change a gauge.

In an embodiment of the present invention, the locking mechanism comprises a locking pin disposed in the axle-box body, an upper end of the locking pin is connected with a return spring, and a lower end of the locking pin extends beyond a bottom of the axle-box body.

In an embodiment of the present invention, a bottom surface of the locking pin is respectively provided on both sides of a central axis thereof as a guide slant sloping upward from the central axis to both sides.

In an embodiment of the present invention, the support rail comprises: a support surface for an axle-box body, horizontally arranged along the length direction of the support rail; a segment of unlocking open groove, provided on the support surface for the axle-box body and opposite to the unlocking section, a groove bottom of the unlocking open groove being provided with an upward-sloping unlocking slant; and a segment of locking open groove, provided on the support surface for the axle-box body and opposite to the locking section, a groove bottom of the locking open groove being provided with a downward-sloping locking slant; the unlocking slant, the locking slant, and the guide slant have the same angle of slope.

In an embodiment of the present invention, the unlocking state monitoring device comprises: a first vertical hole, corresponding to an end of the unlocking open groove and communicating the support surface for the axle-box body , a first vertical displacement sensor being provided in the first vertical hole; and a first horizontal hole, communicating a groove bottom of the end of the unlocking open groove, a first lateral displacement sensor being provided in the first horizontal hole.

In an embodiment of the present invention, the locking state monitoring device comprises: a second vertical hole, corresponding to an end of the locking open groove and communicating the support surface for the axle-box body , a second vertical displacement sensor being provided in the second vertical hole; and a second horizontal hole, communicating a groove bottom of the end of the locking open groove, a second lateral displacement sensor being provided in the second horizontal hole.

In an embodiment of the present invention, each of the first vertical displacement sensor, the first lateral displacement sensor, the second vertical displacement sensor, and the second lateral displacement sensor is communicated with controller.

In an embodiment of the present invention, the first horizontal hole horizontally penetrates a side wall of the unlocking open groove, and the second horizontal hole horizontally penetrates a side wall of the locking open groove.

In an embodiment of the present invention, the locking mechanism further includes an inner sleeve, a rolling bearing, and an outer sleeve.

In an embodiment of the present invention, the inner sleeve, the rolling bearing, and the outer sleeve are tightly sleeved in sequence from inside to outside, the inner sleeve is in clearance fit with the axle, and the outer sleeve is in clearance fit with an inner surface of the axle-box body; opposite sides outside the outer sleeve are provided with bosses axially extending along the outer sleeve, and a plurality of flutes are disposed at intervals along the length directions of the bosses; an interior side wall of the axle-box body is provided with concave arc surfaces corresponding to the flutes one by one, and a locking space of the locking pin is defined by the flutes and the concave arc surfaces.

In an embodiment of the present invention, the locking pin comprises a pin body, one side of which is provided with an open groove penetrating along the radial direction of the pin body; the open groove is provided with at least one lug extending axially along the pin body, an upper end of the lug is connected with a groove top of the open groove, and a notch is reserved between a lower end of the lug and a groove bottom of the open groove; the lug is inserted into the flute, and a side of the pin body opposite to the lug is inserted into the concave arc surface.

### (III) Beneficial effects

Compared with the prior art, the present invention has at least the following advantages:
The embodiments of the present invention provide a ground gauge-changing facility for a gauge-changing wheelset, in which an unlocking emergency braking section is provided behind the unlocking section on the basis of the existing ground gauge-changing facilities. If the unlocking is unsuccessful, the vehicle may be braked in the unlocking emergency braking section to prevent the wheelset that is not unlocked from entering the gauge-changing section, and to avoid damage to the vehicle and the ground gauge-changing facility, as well as accidents therefrom. Likewise, a locking emergency braking section is provided behind the locking section, and thus, if the locking is unsuccessful, the vehicle may be braked in the locking emergency braking section to avoid accidents caused by locking failures.

In addition, in the embodiments of the present invention, unlocking state monitoring devices are provided proximal to an end of the unlocking section to monitor whether the unlocking is successful. Locking state monitoring devices are provided proximal to an end of the locking section to monitor whether the locking is successful, which helps the driver to accurately make sure whether the unlocking or locking is successful and provides an accurate basis for whether to perform the corresponding emergency braking in the next step, thereby avoiding accidents.

### BRIEF DESCRIPTION OF THE DRAWINGS

Fig. 1 is a top view of the overall structure of the ground gauge-changing facility for a gauge-changing wheelset according to an embodiment of the present invention;
Fig. 2 (a) and Fig. 2 (b) are respectively a side view and a front view of a case in which the gauge-changing wheelset passes through first guide rails according to an embodiment of the present invention;
Fig. 3 (a) and Fig. 3 (b) are respectively a side view and a front view of a case in which the gauge-changing wheelset passes through a rail lowering section according to an embodiment of the present invention;
Fig. 4 (a) and Fig. 4 (b) are respectively a side view and a front view of a case in which the gauge-changing wheelset passes through unlocking sections according to an embodiment of the present invention;
Fig. 5 (a) and Fig. 5 (b) are respectively a side view and a front view of a case in which the gauge-changing wheelset just enters the gauge-changing guide rails according to an embodiment of the present invention;
Fig. 6 (a) and Fig. 6 (b) are respectively a side view and a front view of a case in which the gauge-changing wheelset just exits the gauge-changing guide rails according to an embodiment of the present invention;
Fig. 7 (a) and Fig. 7 (b) are respectively a side view and a front view of a case in which the gauge-changing wheelset passes through the locking sections according to an embodiment of the present invention;
Fig. 8 (a) and Fig. 8 (b) are respectively a side view and a front view of a case in which the gauge-changing wheelset is just about to enter a rail lifting section according to an embodiment of the present invention;
Fig. 9 (a) and Fig. 9 (b) are respectively a side view and a front view of a case in which the gauge-changing wheelset passes through the rail lifting section according to an embodiment of the present invention;
Fig. 10 (a) and Fig. 10 (b) are respectively a side view and a front view of a case in which the gauge-changing wheelset passes through second guide rails according to an embodiment of the present invention;
Fig. 11 is a schematic diagram of the position of the unlocking state monitoring device according to an embodiment of the present invention;
Fig. 12 is a schematic diagram of the position of the locking state monitoring device according to an embodiment of the present invention;
Fig. 13 is a schematic diagram of the axial section of the gauge-changing wheelset according to an embodiment of the present invention; and
Fig. 14 is a structural schematic diagram of the locking pin according to an embodiment of the present invention;

**Reference numerals:**

| | | | |
|---|---|---|---|
| 10 | support rail | 20 | first guide rail |
| 21 | rail lowering section | 30 | gauge-changing guide rail |
| 40 | second guide rail | 41 | rail lifting section |
| 50 | unlocking section | 51 | unlocking emergency braking section |
| 60 | locking section | 61 | locking emergency braking section |
| 80 | gauge-changing wheelset | 81 | wheel |
| 82 | axle | 83 | outer sleeve |
| 831 | boss | 832 | flute |
| 84 | rolling bearing | 85 | return spring |
| 86 | locking pin | 861 | pin body |
| 862 | open groove | 863 | lug |
| 864 | notch | 865 | guide slant |
| 90 | axle-box body | 91 | concave arc surface |
| 100 | unlocking slant | 110 | locking slant |
| 120 | first vertical hole | 130 | first horizontal hole |
| 140 | second vertical hole | 150 | second horizontal hole |

### DETAILED DESCRIPTION

Specific embodiments of the present invention will be described in further detail below in conjunction with the drawings and embodiments. The following examples are used to illustrate the present invention, rather than to limit the scope of the present invention.

With respect to the description of the present invention, it should be noted that the orientation or positional relation indicated by the terms such as "center", "longitudinal", "lateral", "upper", "lower", "front", "back", "left", "right", "vertical", "horizontal", "top", "bottom", "inner", "outer" is based on the orientation or positional relationship shown in the drawings, the purpose of which is only to facilitate describing the present invention and simplify the description, rather than to indicate or imply that the device or element referred to must have a specific orientation, be constructed and operated in a specific orientation, and therefore cannot be construed as a limitation of the present invention. In addition, the terms "first," "second" and "third" are for descriptive purpose only, and cannot be understood as indicating or implying the relative importance.

In the description of the present invention, it should be noted that, unless otherwise clearly specified or defined, the terms "install", "connect with" and "connect to" should be understood in a broad sense, for example, it can be a fixed connection or a detachable connection, or an integral connection; it can be mechanically connected or electrically connected; it can be directly connected or indirectly connected through an intermediary, and can be communication between interiors of two elements. For those of ordinary skill in the art, the specific meaning of the above terms in the present invention can be understood according to the specific situations.

In addition, in the description of the present invention, unless otherwise specified, "a plurality of', "multiple", and "multiple sets" mean two or more.

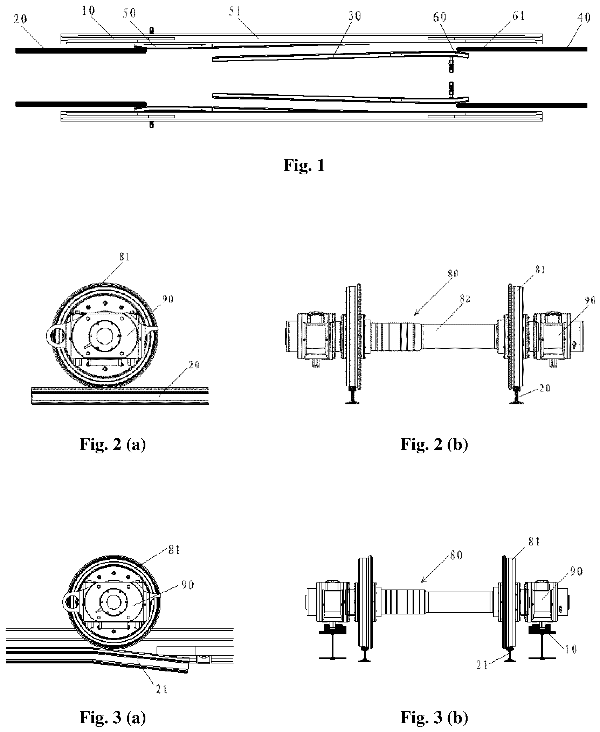

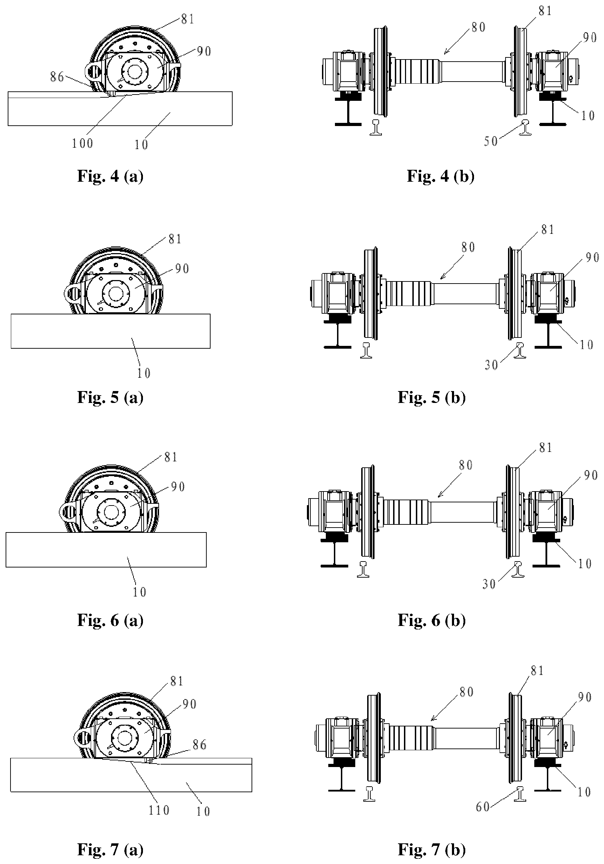

Figs. 1-14 shows a ground gauge-changing facility for a gauge-changing wheelset provided by an embodiment of the present invention, the ground gauge-changing facility comprises a pair of support rails 10 provided in parallel, and a pair of first guide rails 20, a pair of gauge-changing guide rails 30, and a pair of second guide rails 40 provided in sequence along interior sides of the pair of support rails 10; an unlocking section 50 is provided between each of the first guide rails 20 and each of the gauge-changing guide rails 30, and an unlocking emergency braking section 51 is provided behind the unlocking section 50. Specifically, the unlocking emergency braking section 51 is a section of guide rail for emergency braking of unlocking. In an embodiment of the present invention, the unlocking emergency braking section 51 is disposed in an idle section between an unlocking slant and a locking slant on the support rail 10. If the unlocking is unsuccessful, the vehicle may be braked in the unlocking emergency braking section 51 to prevent the wheelset that is not unlocked from entering the gauge-changing section, and to avoid damage to the vehicle and the ground gauge-changing facility, as well as accidents therefrom. A locking section 60 is provided between each of the gauge-changing guide rails 30 and each of the second guide rails 40. A locking emergency braking section 61 is provided behind the locking section 60. Specifically, the locking emergency braking section 61 is a section of guide rail for emergency braking of locking. In an embodiment of the present invention, the locking emergency braking section 61 is disposed on the second guide rail 40, i.e., a start section of the second guide rail 40 is used as the locking emergency braking section 61. If the locking is unsuccessful, the vehicle may be braked in the locking emergency braking section 61 to avoid accidents caused by vehicles with locking failures.

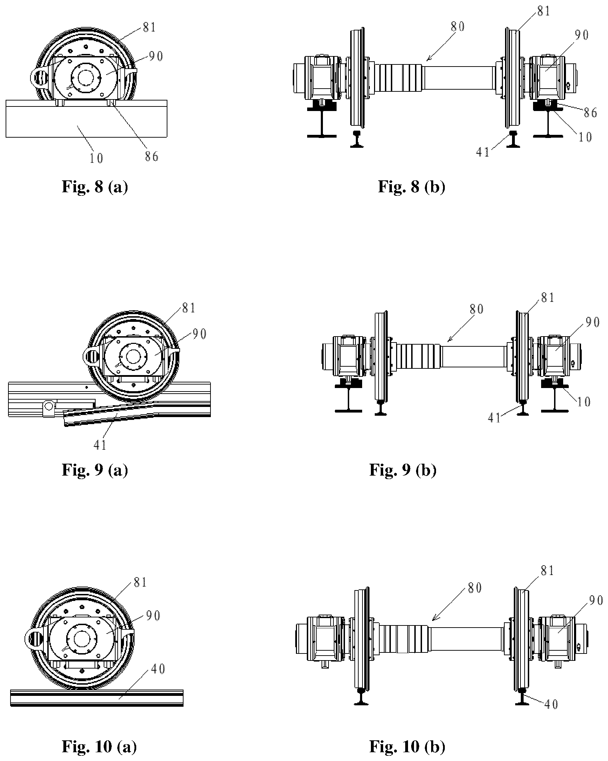

In an embodiment of the present invention, Fig. 2 (a), Fig. 2 (b) to Fig. 10 (a), Fig. 10 (b) show an entire gauge change process of the gauge-changing wheelset 80 from the first guide rail 20 to the second guide rail 40; unlocking state monitoring devices are provided proximal to an end of the unlocking section 50, i.e., the position where the unlocking process is about to end, and are configured to monitor whether the gauge-changing wheelset 80 passing through the unlocking section 50 is successfully unlocked. Locking state monitoring devices are provided proximal to an end of the locking section 60, i.e., the position where the locking process is about to be terminated, and are configured to monitor whether the gauge-changing wheelset 80 passing through the locking section 60 is successfully locked, and thereby provide an accurate basis for whether a corresponding emergency braking is needed after the vehicle enters the unlocking emergency braking section 51 and the locking emergency braking section 61 in the next step, so as to avoid accidents. For instance, when the unlocking state monitoring device detects that the unlocking fails, it sends a signal to a ground system to notify a driver of performing emergency braking in the subsequent unlocking emergency braking section 51, so as to prevent the vehicle with unlocking failure from entering the gauge-changing section and avoid damage to the wheelset and ground gauge-changing facilities, as well as safety accidents.

Specifically, in order not to affect the overall layout of the ground gauge-changing facility, to protect the unlocking state monitoring devices and the locking state monitoring devices from being damaged, and to facilitate installation, the unlocking state monitoring devices are respectively disposed inside the pair of the support rails 10 opposite to the end of the unlocking section 50; and the locking state monitoring devices are respectively disposed inside the pair of the support rails 10 opposite to the end of the locking section 60.

In an embodiment of the present invention, the gauge-changing wheelset 80 comprises wheels 81, an axle 82, and locking mechanisms. The wheels 81 are respectively provided at both ends of the axle 82, and are connected with the axle 82 though splines, which facilitates not only the transmission of torque, but also the sliding of the wheels 81 along the axle 82. The locking mechanisms are respectively provided on exterior sides of the wheels 81 and located in an axle-box body 90 at both ends of the axle 82. The locking mechanisms are connected with the wheels 81. An end of the first guide rail 20 facing the gauge-changing guide rail 30 is configured as a downward-sloping first slope surface to form a rail lowering section 21. The gauge-changing wheelset 80 is supported by the wheels 81 and then becomes supported by the axle-box body 90 when passing through the rail lowering section 21 for preparing for the next step of unlocking. When the gauge is changed, after successful unlocking, the wheel 81 drives the locking mechanisms to move together, at which point the locking mechanisms move along the axle-box body 90; and when they move to the changed gauge, the locking is performed. An end of the second guide rail 40 facing the gauge-changing guide rail 30 is configured as an upward-sloping second slope surface to form a rail lifting section 41, the gauge-changing wheelset 80 of which the gauge is changed is carried by the wheels 81 again after passing through the rail lifting section 41. The wheels 81 are unlocked and locked by the locking mechanisms to facilitate the gauge change.

Specifically, each of the locking mechanisms includes a locking pin 86 disposed in the axle-box body 90, an upper end of the locking pin 86 is connected with a return spring 85, and a lower end of the locking pin 86 extends beyond a bottom of the axle-box body 90. An upper end of the return spring 85 is connected with a support base in the axle-box body 90; a lower end of the return spring 85 is firmly sleeved on an upper end of the locking pin 86; and the return spring 85 may provide the locking pin 86 with a locking force during locking. During unlocking process, the unlocking is performed by compressing the return spring 85; an acting force is applied to the locking pins 86 through the locking section 60 and the unlocking section 50 of the ground gauge-changing facility, which enables the telescoping of the locking pin 86 for locking and unlocking.

Further, a bottom surface of the locking pin 86 is respectively provided on both sides of a central axis thereof as a guide slant 865 sloping upward from the central axis to both sides, and the orientation of the guide slant 865 is the same as the length direction of the support rail 10.

In an embodiment of the present invention, the support rail 10 comprises: a support surface for an axle-box body 90, horizontally arranged along the length direction of the support rail 10; a segment of unlocking open groove, provided on the support surface for axle-box body 90 and opposite to the unlocking section 50, a groove bottom of the unlocking open groove being provided with an upward-sloping unlocking slant 100; and a segment of locking open groove, provided on the axle-box body 90 support surface and opposite to the locking section 60, a groove bottom of the locking open groove being provided with a downward-sloping locking slant 110. Preferably, openings of the unlocking open groove and the locking open groove are located in the middle of the support rail 10 along the width direction thereof; the unlocking slant 100, the locking slant 110, and the guide slant 865 share the same angle of slope. When the gauge is changed, the axle-box body 90 is supported on the support surface for the axle-box body 90, the locking pin 86 passes through the unlocking slant 100 from below the axle-box body 90, and the guide slant 865 on one side fits the unlocking slant 100, the locking pin 86 is gradually lifted by an upward force to complete the unlocking. When the locking pin 86 passes through the locking slant 110, the guide slant 865 on the other side fits the locking slant 110, and the locking pin 86 gradually moves downward along the downward-sloping locking slant 110 under the action of its own gravity and a downward force of the return spring 85, until the locking is completed.

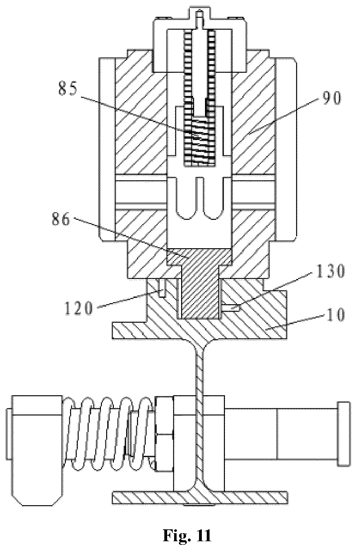

In an embodiment of the present invention, as shown in Fig. 11, the unlocking state monitoring device includes: a first vertical hole 120, corresponding to an end of the unlocking open groove, where the unlocking section 50 is about to end and previous to entering the unlocking emergency braking section 51, and vertically communicating the support surface of the axle-box body 90, a first vertical displacement sensor is provided in the first vertical hole 120; and a first horizontal hole 130, horizontally communicating a groove bottom of the end of the unlocking open groove, and a first lateral displacement sensor is provided in the first horizontal hole 130.

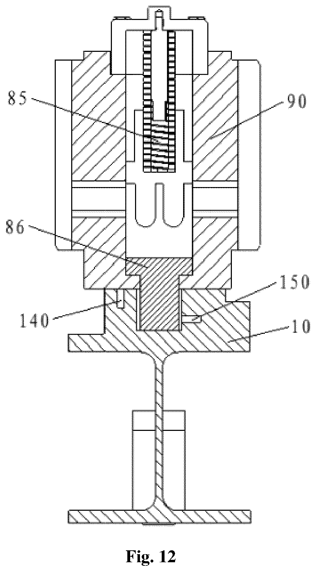

As shown in Fig. 12, the locking state monitoring device includes: a second vertical hole 140, corresponding to an end of the locking open groove, where the locking section 60 is about to end and previous to entering the locking emergency braking section 61, and vertically communicating the support surface of the axle-box body 90, a second vertical displacement sensor is provided in the second vertical hole 140; and a second horizontal hole 150, horizontally communicating a groove bottom of the end of the locking open groove, a second lateral displacement sensor is provided in the second horizontal hole 150.

Each of the first vertical displacement sensor, the first lateral displacement sensor, the second vertical displacement sensor, and the second lateral displacement sensor is communicated with a controller for transmitting the collected position signals of the axle-box body 90 and the locking pin 86 to the controllers, and then control commands are sent to the driver by the controllers. Further, each of the first vertical displacement sensor, the first lateral displacement sensor, the second vertical displacement sensor, and the second lateral displacement sensor is preferably a laser displacement sensor.

The working principle of the unlocking state monitoring device and the locking state monitoring device of the embodiments of the present invention is as follows: when the locking pin 86 is detected by the first lateral displacement sensor, it indicates that the wheelset is located at a detection position of the state monitoring device. At this time, if the axle-box body 90 can be detected by the first vertical displacement sensors on both sides, it indicates that the unlocking is successful; otherwise, if the first vertical displacement sensors on one or both sides fail to detect the axle-box body 90, it indicates that the axle-box body 90 is lifted up due to the clamping of the locking pin 86 or other reasons, and the unlocking is unsuccessful. If the unlocking fails, a signal is sent to the controllers of the ground system to notify the driver of performing emergency braking in the subsequent unlocking emergency braking section 51, so as to prevent the vehicle with unlocking failure from entering the gauge-changing section and avoid damage to the wheelsets and ground gauge-changing facilities, as well as safety accidents.

When the axle-box body 90 is detected by the second vertical displacement sensor, it indicates that the wheelset is located at a detection position of the state monitoring device. At this time, if the locking pin 86 can be detected by the second lateral displacement sensors on both sides, it indicates that the unlocking is successful; otherwise, if the second lateral displacement sensors on one or both sides fail to detect the locking pin 86, it indicates that the locking pin 86 cannot fall due to the clamping of the locking pin 86, the failure of the return spring 85 of the locking pin 86 or other reasons, and the unlocking is unsuccessful. If the unlocking fails, a signal is sent to the controllers of the ground system to notify the driver of performing emergency braking in the subsequent locking emergency braking section 61, so as to prevent the vehicle with locking failure from exiting the ground gauge-changing facility with huge safety hazards, thereby avoiding safety accidents.

Specifically, the first horizontal hole 130 horizontally penetrates through a side wall of the unlocking opening groove, and the second horizontal hole 150 horizontally penetrates through a side wall of the locking opening groove.

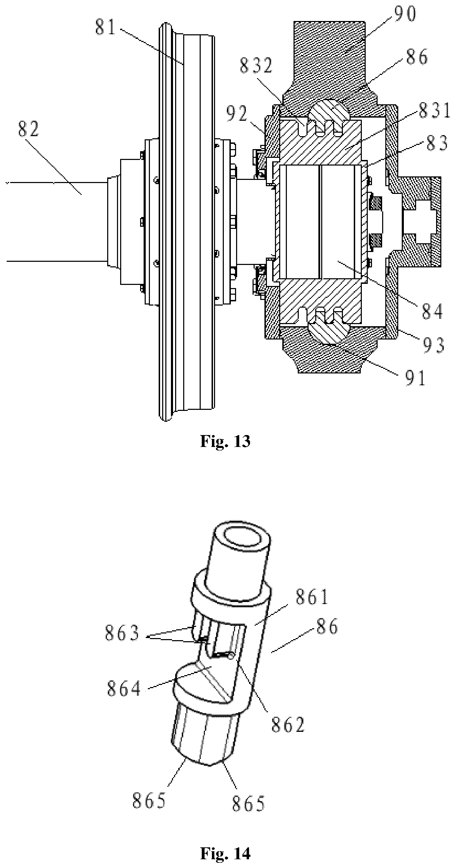

Specifically, as shown in Fig. 13, the locking mechanism may further comprise an inner sleeve (not shown in the figure), a rolling bearing 84, and an outer sleeve 83.

The inner sleeve, the rolling bearing 84, and the outer sleeve 83 are tightly sleeved in sequence from inside to outside. The inner sleeve is in clearance fit with the axle 82; and the outer sleeve 83 is in clearance fit with an inner surface of the axle-box body 90. Opposite sides outside the outer sleeve 83 are provided with bosses 831 axially extending along the outer sleeve 83; and a plurality of flutes 832 are disposed at intervals along the length directions of the bosses 831. An interior side wall of the axle-box body 90 is provided with concave arc surfaces 91 corresponding to the flutes 832 respectively. A locking space of the locking pin 86 is defined by the flutes 832 and the concave arc surfaces 91. Specifically, when the locking pin 86 is inserted into the locking space, a part of the locking pin 86 is located in the flute 832, the other part thereof fits the concave arc surface 91; and the position of the outer sleeve 83 is fixed relative to the axle-box body 90 for locking and the position of the wheel 81 is fixed relative to the axle 82. When the gauge needs to be changed, the locking pin 86 is disengaged from the locking space in which it is located under the action of an external force for unlocking. In the present embodiment, an upward thrust is preferably used to disengage the locking pin 86 from the locking space; at this time, the gauge-changing guide rails 30 is configured to push the wheels 81 to move outward or inward along the axle 82. Specifically, the guide grooves on the gauge-changing guide rails 30 are arranged with angle. For example, the angle between the guide grooves becomes progressively larger or smaller. When the wheels 81 pass through the guide grooves, they are subjected to an inward or outward extruding force; and then drives the outer sleeve 83 to move relative to the axle-box body 90 and the locking pins 86. When the locking space corresponding to the change in the gauge moves to just below the locking pins 86, the locking pins 86 are inserted into the locking space under the action of its own gravity and downward force, and the gauge of the wheel 81 is changed completely.

In an embodiment of the present invention, as shown in Fig. 14, the locking pin 86 includes a pin body 861, one side of which is provided with an open groove 862 penetrating along the radial direction of the pin body 861. The open groove 862 is provided with at least one lug 863 extending along the axial direction of the pin body 861. Preferably, two parallel lugs 863 are provided to improve the forces on individual lugs 863 and enhance reliability. An upper end of the lug 863 is connected with a groove top of the open groove 862. A notch 864 is provided between a lower end of the lug 863 and a groove bottom of the open groove 862. The lugs 863 are inserted into the flute 832. A side of the pin body 861 opposite to the lugs 863 is inserted into the concave arc surface 91. When the gauge is changed, the locking pins 86 located on both sides of the outer sleeve 83 pass through the unlocking slant 100 simultaneously; and the pin body 861 is gradually lifted up by an upward acting force, and disengaged from the flutes 832 from bottom to top to complete the unlocking. The lugs 863 are firstly disengaged from the flutes 832 from bottom to top, and move to a position above the flutes 832. At this time, the notch 864 under the lug 863 is opposite to the boss 831 between the two flutes 832; and the wheels 81 are applied with an external force to the left or right by the gauge-changing guide rail 30. The outer sleeve 83 moves along with the wheels 81; the boss 831 clips into the notch 864 and moves along the notch 864. The lower end of the lug 863 is supported on the boss surface of the boss 831 until it moves to the position of another flute 832. When the locking pins 86 located on both sides of the outer sleeve 83 pass through the locking slant 110 simultaneously, the pin body 861 gradually moves downward along the downward-sloping locking slant 110 under the action of its own gravity and the downward force of the return spring 85, until the lug 863 is inserted into the flute 832 to finish the locking, and thus the gauge is changed.

According to the embodiments above, an unlocking emergency braking section 51 is provided behind the unlocking section 50, by way of which, the vehicle may be braked in the unlocking emergency braking section 51 to prevent the wheelset that is not unlocked from entering the gauge-changing section, and to avoid damage to the vehicle and the ground gauge-changing facility, as well as accidents therefrom; likewise, a locking emergency braking section 61 is provided behind the locking section 60, and thus the vehicle can be braked in the locking emergency braking section 61 to avoid accidents caused by locking failures.

In addition, in the embodiments of the present invention, unlocking state monitoring devices are provided proximal to an end of the unlocking section 50 to monitor whether the unlocking is successful. Locking state monitoring devices are provided proximal to an end of the locking section 60 to monitor whether the locking is successful, which helps the driver to accurately make sure whether the unlocking or locking is successful and provides an accurate basis for whether to perform the corresponding emergency braking in the next step, thereby avoiding accidents and ensuring security.

## Claims

1. A ground gauge-changing facility for a gauge-changing wheelset (80), comprising a pair of support rails (10) provided in parallel, and a pair of first guide rails (20), a pair of gauge-changing guide rails (30), and a pair of second guide rails (40) provided in sequence along interior sides of the pair of support rails (10); an unlocking section (50) is provided between each of the first guide rails (20) and each of the gauge-changing guide rails (30), and an unlocking emergency braking section (51) is provided behind the unlocking section (50); a locking section (60) is provided between each of the gauge-changing guide rails (30) and each of the second guide rails (40), and a locking emergency braking section (61) is provided behind the locking section (60); unlocking state monitoring devices are provided proximal to an end of the unlocking section (50), and locking state monitoring devices are provided proximal to an end of the locking section (60);
**characterized in that**, the unlocking state monitoring devices are respectively disposed inside the pair of the support rails (10) opposite to the end sections of the unlocking sections (50), and the locking state monitoring devices are respectively disposed inside the pair of the support rails (10) opposite to the end sections of the locking sections (60).

2. The ground gauge-changing facility for a gauge-changing wheelset (80) of claim 1, wherein the gauge-changing wheelset (80) comprises wheels (81), an axle (82), and locking mechanisms; the wheels (81) are respectively provided at both ends of the axle (82), and are connected with the axle (82) through splines; the locking mechanisms are respectively provided on exterior sides of the wheels (81) and located in an axle-box body (90) at both ends of the axle (82); the locking mechanisms are connected with the wheels (81), and the wheels (81) are unlocked and locked by the locking mechanisms to change a gauge.

3. The ground gauge-changing facility for a gauge-changing wheelset (80) of claim 2, wherein the locking mechanism comprises a locking pin (86) disposed in the axle-box body (90), an upper end of the locking pin (86) is connected with a return spring (85), and a lower end of the locking pin (86) extends beyond a bottom of the axle-box body (90).

4. The ground gauge-changing facility for a gauge-changing wheelset of claim 3, wherein a bottom surface of the locking pin (86) is respectively provided on both sides of a central axis (82) of the locking pin (86) as a guide slant (865) sloping upward from the central axis (82) to both sides.

5. The ground gauge-changing facility for a gauge-changing wheelset (80) of claim 4, wherein each of the support rails (10) comprises:
a support surface for an axle-box body (90), horizontally arranged along the length direction of the support rail (10);
a segment of unlocking open groove (862), provided on the support surface for the axle-box body (90) and opposite to the unlocking section, a groove bottom of the unlocking open groove (862) being provided with an upward-sloping unlocking slant (100); and
a segment of locking open groove (862), provided on the support surface for the axle-box body (90) and opposite to the locking section (60), a groove bottom of the locking open groove (862) being provided with a downward-sloping locking slant (110);
wherein the unlocking slant (100), the locking slant (110), and the guide slant (865) have the same angle of slope.

6. The ground gauge-changing facility for a gauge-changing wheelset (80) of claim 5, wherein the unlocking state monitoring device comprises: a first vertical hole (120), corresponding to an end of the unlocking open groove (862) and communicating the support surface for the axle-box body (90), a first vertical displacement sensor being provided in the first vertical hole (120); and a first horizontal hole (130), communicating a groove bottom of the end of the unlocking open groove (862), a first lateral displacement sensor being provided in the first horizontal hole (130);
the locking state monitoring device comprises: a second vertical hole (140), corresponding to an end of the locking open groove (862) and communicating the support surface for the axle-box body (90), a second vertical displacement sensor being provided in the second vertical hole (140); and a second horizontal hole (150), communicating a groove bottom of the end of the locking open groove (862), a second lateral displacement sensor being provided in the second horizontal hole (150);
each of the first vertical displacement sensor, the first lateral displacement sensor, the second vertical displacement sensor, and the second lateral displacement sensor is communicated with a controller.

7. The ground gauge-changing facility for a gauge-changing wheelset (80) of claim 6, **characterized in that**, the first horizontal hole (130) horizontally penetrates through a side wall of the unlocking opening groove (862), and the second horizontal hole (150) horizontally penetrates through a side wall of the locking opening groove (862).

8. The ground gauge-changing facility for a gauge-changing wheelset (80) of any one of claims 3-7, wherein the locking mechanism further comprises an inner sleeve, a rolling bearing (84), and an outer sleeve (83);
the inner sleeve, the rolling bearing (84), and the outer sleeve (83) are tightly sleeved in sequence from inside to outside, the inner sleeve is in clearance fit with the axle (82), and the outer sleeve (83) is in clearance fit with an inner surface of the axle-box body (90); opposite sides outside the outer sleeve (83) are provided with bosses (831) axially extending along the outer sleeve (83), and a plurality of flutes (832) are disposed at intervals along the length directions of the bosses (831); an interior side wall of the axle-box body (90) is provided with concave arc surfaces (91) corresponding to the flutes (832) respectively, and a locking space of the locking pin (86) is defined by the flutes (832) and the concave arc surfaces (91).

9. The ground gauge-changing facility for a gauge-changing wheelset (80) of claim 8, wherein the locking pin (86) comprises a pin body (861), one side of which is provided with an open groove (862) penetrating along the radial direction of the pin body (861); the open groove (862) is provided with at least one lug (863) extending along the axial direction of the pin body (861), an upper end of the lug (863) is connected with a groove top of the open groove (862), and a notch (864) is reserved between a lower end of the lug (863) and a groove bottom of the open groove (862); the lug (863) is inserted into the flute (832), and a side of the pin body (861) opposite to the lug (863) is inserted into the concave arc surface (91).

## Patentansprüche

1. Eine Bodenspurwechselvorrichtung für einen Spurwechselradsatz (80), aufweisend ein Paar von Stützschienen (10), welche parallel bereitgestellt sind, und ein Paar von ersten Führungsschienen (20), ein Paar von Spurwechsel-Führungsschienen (30), und ein Paar von zweiten Führungsschienen (40), welche in einer Sequenz entlang von inneren Seiten des Paars von Stützschienen (10) bereitgestellt sind; wobei eine Entriegelungssektion (50) zwischen jedem der ersten Führungsschienen (20) und jedem der Spurwechsel-Führungsschienen (30) bereitgestellt ist, und eine Entriegelungsnotbremsensektion (51) hinter der Entriegelungssektion (50) bereitgestellt ist; wobei eine Verriegelungssektion (60) zwischen jedem der Spurwechsel-Führungsschienen (30) und jedem der zweiten Führungsschienen (40) bereitgestellt ist, und eine Verriegelungsnotbremsensektion (61) hinter der Verriegelungssektion (60) bereitgestellt ist; wobei Entriegelungszustand-Überwachungsvorrichtungen in der Nähe eines Endes der Entriegelungssektion (50) bereitgestellt sind, und Verriegelungszustand-Überwachungsvorrichtungen in der Nähe eines Endes der Verriegelungssektion (60) bereitgestellt sind;
**dadurch gekennzeichnet, dass** die Entriegelungszustand-Überwachungsvorrichtungen jeweils in dem Paar der Stützschienen (10) angeordnet sind, welche den Endsektionen der Entriegelungssektionen (50) gegenüberliegen, und die Verriegelungszustand-Überwachungsvorrichtungen jeweils in dem Paar der Stützschienen (10) angeordnet sind, welche den Endsektionen der Verriegelungssektionen (60) gegenüberliegen.

2. Die Bodenspurwechselvorrichtung für einen Spurwechselradsatz (80) gemäß Anspruch 1, wobei der Spurwechselradsatz (80) Räder (81), eine Achse (82), und Verriegelungsmechanismen aufweist; wobei die Räder (81) jeweils an beiden Enden der Achse (82) bereitgestellt sind und mit der Achse (82) durch Keile verbunden sind; wobei die Verriegelungsmechanismen jeweils auf äußeren Seiten der Räder (81) bereitgestellt sind und in einem Achsengehäusekörper (90) an beiden Enden der Achse (82) angeordnet sind; wobei die Verriegelungsmechanismen mit den Rädern (81) verbunden sind, und die Räder (81) mittels der Verriegelungsmechanismen entriegelt und verriegelt werden, um eine Spur zu wechseln.

3. Die Bodenspurwechselvorrichtung für einen Spurwechselradsatz (80) gemäß Anspruch 2, wobei der Verriegelungsmechanismus einen Verriegelungsstift (86) aufweist, welcher in dem Achsengehäusekörper (90) angeordnet ist, wobei ein oberes Ende des Verriegelungsstifts (86) mit einer Rückstellfeder (85) verbunden ist, und ein unteres Ende des Verriegelungsstifts (86) sich über eine Unterseite des Achsengehäusekörpers (90) hinaus erstreckt.

4. Die Bodenspurwechselvorrichtung für einen Spurwechselradsatz gemäß Anspruch 3, wobei eine untere Oberfläche des Verriegelungsstifts (86) jeweils auf beiden Seiten einer zentralen Achse (82) des Verriegelungsstifts (86) als eine Führungsneigung (865) bereitgestellt ist, welche sich von der zentralen Achse (82) zu beiden Seiten nach oben neigt.

5. Die Bodenspurwechselvorrichtung für einen Spurwechselradsatz (80) gemäß Anspruch 4, wobei jede der Stützschienen (10) aufweist:
eine Stützfläche für einen Achsengehäusekörper (90), welche horizontal entlang der Längenrichtung der Stützschiene (10) angeordnet ist;
ein Segment einer entriegelnden offenen Nut (862), welches auf der Stützfläche für den Achsengehäusekörper (90) und gegenüberliegend zu der Entriegelungssektion bereitgestellt ist, wobei ein Nutboden der entriegelnden offenen Nut (862) mit einer sich nach oben neigenden entriegelnden Neigung (100) bereitgestellt ist; und
ein Segment einer verriegelnden offenen Nut (862), welche auf der Stützfläche für den Achsengehäusekörper (90) und gegenüberliegend zu der Verriegelungssektion (60) bereitgestellt ist, wobei ein Nutboden der verriegelnden offenen Nut (862) mit einer sich nach unten neigenden verriegelnden Neigung (110) bereitgestellt ist;
wobei die entriegelnde Neigung (100), die verriegelnde Neigung (110), und die Führungsneigung (865) den gleichen Neigungswinkel haben.

6. Die Bodenspurwechselvorrichtung für einen Spurwechselradsatz (80) gemäß Anspruch 5, wobei die Entriegelungszustand-Überwachungsvorrichtung aufweist:
eine erste vertikale Öffnung (120), welche zu einem Ende der entriegelnden offenen Nut (862) korrespondiert, und mit der Stützfläche für den Achsengehäusekörper (90) kommuniziert, einen ersten vertikalen Verschiebungssensor, welche in der ersten vertikalen Öffnung (120) bereitgestellt ist; und eine erste horizontale Öffnung (130), welche mit einem Nutboden des Endes der entriegelnden offenen Nut (862) kommuniziert, einen ersten seitlichen Verschiebungssensor, welcher in der ersten horizontalen Öffnung (130) bereitgestellt ist;
wobei die Verriegelungszustand-Überwachungsvorrichtung aufweist: eine zweite vertikale Öffnung (140), welche zu einem Ende der verriegelnden offenen Nut (862) korrespondiert, und mit der Stützfläche für den Achsengehäusekörper (90) kommuniziert, einen zweiten vertikalen Verschiebungssensor, welcher in der zweiten vertikalen Öffnung (140) bereitgestellt ist; und eine zweite horizontale Öffnung (150), welche mit einem Nutboden des Endes der verriegelnden offenen Nut (862) kommuniziert, einen zweiten seitlichen Verschiebungssensor, welcher in der zweiten horizontalen Öffnung (150) bereitgestellt ist;
wobei jeder des ersten vertikalen Verschiebungssensors, des ersten seitlichen Verschiebungssensors, des zweiten vertikalen Verschiebungssensors, und des zweiten seitlichen Verschiebungssensors mit einem Controller kommuniziert.

7. Die Bodenspurwechselvorrichtung für einen Spurwechselradsatz (80) gemäß Anspruch 6, **dadurch gekennzeichnet, dass** die erste horizontale Öffnung (130) horizontal durch eine Seitenwand der entriegelnden Öffnungsnut (862) dringt, und die zweite horizontale Öffnung (150) horizontal durch eine Seitenwand der verriegelnden Öffnungsnut (862) dringt.

8. Die Bodenspurwechselvorrichtung für einen Spurwechselradsatz (80) gemäß einem beliebigen der Ansprüche 3 bis 7, wobei der Verriegelungsmechanismus ferner eine innere Hülse, ein Rollenlager (84), und eine äußere Hülse (83) aufweist;
wobei die innere Hülse, das Rollenlager (84), und die äußere Hülse (83) in einer Sequenz von innen nach außen fest ummantelt sind, wobei die innere Hülse in einer Spielpassung mit der Achse (82) ist, und die äußere Hülse (83) in einer Spielpassung mit einer inneren Oberfläche des Achsengehäusekörpers (90) ist;
wobei gegenüberliegende Seiten außerhalb der äußeren Hülse (83) mit Naben (831) bereitgestellt sind, welche sich axial entlang der äußeren Hülse (83) erstrecken, und eine Mehrzahl von Rillen (832) bei Intervallen entlang den Längenrichtungen der Naben (831) angeordnet sind; wobei eine innere Seitenwand des Achsengehäusekörpers (90) mit konkaven Bogenflächen (91) bereitgestellt ist, welche jeweils zu den Rillen (832) korrespondieren, und ein Verriegelungsraum des Verriegelungsstifts (86) von den Rillen (832) und den konkaven Bogenflächen (91) definiert ist.

9. Die Bodenspurwechselvorrichtung für einen Spurwechselradsatz (80) gemäß Anspruch 8, wobei der Verriegelungsstifts (86) einen Stiftkörper (861) aufweist, dessen eine Seite mit einer offenen Nut (862) bereitgestellt ist, welche entlang der radialen Richtung des Stiftkörpers (861) durchdringt; wobei die offene Nut (862) mit mindestens einer Öse (863) bereitgestellt ist, welche sich entlang der axialen Richtung des Stiftkörpers (861) erstreckt, wobei ein oberes Ende der Öse (863) mit einer Nutoberseite der offenen Nut (862) verbunden ist, und eine Einkerbung (864) zwischen einem unteren Ende der Öse (863) und einem Nutboden der offenen Nut (862) reserviert ist; wobei die Öse (863) in die Rille (832) eingesetzt ist, und eine Seite des Stiftkörpers (861), welche der Öse (863) gegenüberliegt, in der konkaven Bogenfläche (91) eingesetzt ist.

## Revendications

1. Appareil de variation d'écartement au sol pour un essieu monté à écartement variable (80), comprenant une paire de rails de support (10) prévus en parallèle, et une paire de premiers rails de guidage (20) ; une paire de rails de guidage à écartement variable (30), et une paire de seconds rails de guidage (40) prévus en séquence le long de côtés intérieurs de la paire de rails de support (10) ; une section de déverrouillage (50) est prévue entre chacun des premiers rails de guidage (20) et chacun des rails de guidage à écartement variable (30), et une section de freinage d'urgence de déverrouillage (51) est prévue derrière la section de déverrouillage (50) ; une section de verrouillage (60) est prévue entre chacun des rails de guidage à écartement variable (30) et chacun des seconds rails de guidage (40), et une section de freinage d'urgence de verrouillage (61) est prévue derrière la section de verrouillage (60) ; des dispositifs de surveillance d'état de déverrouillage sont prévus à proximité d'une extrémité de la section de déverrouillage (50), et des dispositifs de surveillance d'état de verrouillage sont prévus à proximité d'une extrémité de la section de verrouillage (60) ;
**caractérisé en ce que** les dispositifs de surveillance d'état de déverrouillage sont disposés respectivement à l'intérieur de la paire de rails de support (10) à l'opposé des sections d'extrémité des sections de déverrouillage (50), et les dispositifs de surveillance d'état de verrouillage sont disposés respectivement à l'intérieur de la paire des rails de support (10) à l'opposé des sections d'extrémité des sections de verrouillage (60).

2. Appareil de variation d'écartement au sol pour un essieu monté à écartement variable(80) selon la revendication 1, dans lequel l'essieu monté à écartement variable (80) comprend des roues (81), un essieu (82) et des mécanismes de verrouillage ; les roues (81) sont respectivement prévues aux deux extrémités de l'essieu (82) et sont reliées à l'essieu (82) par des cannelures ; les mécanismes de verrouillage sont respectivement prévus sur les côtés extérieurs des roues (81) et situés dans un corps de boîte d'essieu (90) aux deux extrémités de l'essieu (82) ; les mécanismes de verrouillage sont reliés aux roues (81) et les roues (81) sont déverrouillées et verrouillées par les mécanismes de verrouillage pour changer un écartement.

3. Appareil de variation d'écartement au sol pour un essieu monté à écartement variable (80) selon la revendication 2, dans laquelle le mécanisme de verrouillage comprend une broche de verrouillage (86) prévue dans le corps de boîte d'essieu (90), une extrémité supérieure de la broche de verrouillage (86) est reliée à un ressort de rappel (85), et une extrémité inférieure de la broche de verrouillage (86) s'étend au-delà d'un fond du corps de boîte d'essieu (90).

4. Appareil de variation d'écartement au sol pour un essieu monté à écartement variable selon la revendication 3, dans lequel une surface inférieure de la broche de verrouillage (86) est respectivement prévue des deux côtés d'un axe central (82) de la broche de verrouillage (86) en tant qu'inclinaison de guidage (865) en pente vers le haut à partir de l'axe central (82) vers les deux côtés.

5. Appareil de variation d'écartement au sol pour un essieu monté à écartement variable (80) selon la revendication 4, dans lequel chacun des rails de support (10) comprend :
une surface de support pour un corps de boîte d'essieu (90), prévue horizontalement le long de la longueur du rail de support (10) ;
un segment de rainure ouverte de déverrouillage (862), prévu sur la surface de support pour le corps de boîte d'essieu (90) et à l'opposé de la section de déverrouillage, un fond de rainure de la rainure ouverte de déverrouillage (862) étant muni d'une inclinaison de déverrouillage en pente vers le haut (100) ; et
un segment de rainure ouverte de verrouillage (862) prévu sur la surface de support pour le corps de boîte d'essieu (90) et à l'opposé de la section de verrouillage (60), un fond de rainure de la rainure ouverte de verrouillage (862) étant pourvu d'une inclinaison de verrouillage en pente vers le bas (110) ;
dans lequel l'inclinaison de déverrouillage (100), l'inclinaison de verrouillage (110) et l'inclinaison de guidage (865) présentent le même angle de pente.

6. Appareil de variation d'écartement au sol pour un essieu monté à écartement variable (80) selon la revendication 5, dans lequel le dispositif de surveillance d'état de déverrouillage comprend : un premier trou vertical (120), correspondant à une extrémité de la rainure ouverte de déverrouillage (862) et communiquant avec la surface de support pour le corps de boîte d'essieu (90), un premier capteur de déplacement vertical étant prévu dans le premier trou vertical (120) ; et un premier trou horizontal (130), communiquant avec un fond de rainure de l'extrémité de la rainure ouverte de déverrouillage (862), un premier capteur de déplacement latéral étant prévu dans le premier trou horizontal (130) ;
le dispositif de surveillance d'état de verrouillage comprend : un second trou vertical (140), correspondant à une extrémité de la rainure ouverte de verrouillage (862) et communiquant avec la surface de support pour le corps de boîte d'essieu (90), un second capteur de déplacement vertical étant prévu dans le second trou vertical (140) ; et un second trou horizontal (150), communiquant avec un fond de rainure de l'extrémité de la rainure ouverte de verrouillage (862), un second capteur de déplacement latéral étant prévu dans le second trou horizontal (150) ;
chacun du premier capteur de déplacement vertical, du premier capteur de déplacement latéral, du second capteur de déplacement vertical et du second capteur de déplacement latéral est mis en communication avec un dispositif de commande.

7. Appareil de variation d'écartement au sol pour un essieu monté à écartement variable(80) selon la revendication 6, **caractérisé en ce que** le premier trou horizontal (130) pénètre horizontalement à travers une paroi latérale de la rainure d'ouverture de déverrouillage (862), et le second trou horizontal (150) pénètre horizontalement à travers une paroi latérale de la rainure ouverte de verrouillage (862).

8. Appareil de variation d'écartement au sol pour un essieu monté à écartement variable(80) selon l'une quelconque des revendications 3 à 7, dans laquelle le mécanisme de verrouillage comprend en outre un manchon intérieur, un palier à roulement (84) et un manchon extérieur (83) ;
le manchon intérieur, le palier à roulement (84), et le manchon extérieur (83) sont étroitement manchonnés en séquence de l'intérieur vers l'extérieur, le manchon intérieur est en ajustement avec jeu avec l'essieu (82), et le manchon extérieur (83) est en ajustement avec jeu avec une surface intérieure du corps de boîte d'essieu (90) ; les côtés opposés à l'extérieur du manchon extérieur (83) sont pourvus de bossages (831) s'étendant axialement le long du manchon extérieur (83), et une pluralité de cannelures (832) sont disposées à des intervalles le long des directions de longueur des bossages (831) ; une paroi latérale intérieure du corps de boîte d'essieu (90) est pourvue de surfaces en arc concaves (91) correspondant aux cannelures (832), respectivement, et un espace de verrouillage de la broche de verrouillage (86) est défini par les cannelures (832) et les surfaces en arc concaves (91).

9. Appareil de variation d'écartement au sol pour un essieu monté à écartement variable (80) selon la revendication 8, dans lequel la broche de verrouillage (86) comprend un corps de broche (861), dont un côté est pourvu d'une rainure ouverte (862) pénétrant le long de la direction radiale du corps de broche (861) ; la rainure ouverte (862) est pourvue d'au moins une patte (863) s'étendant le long de la direction axiale du corps de broche (861), une extrémité supérieure de la patte (863) est reliée à un sommet de rainure de la rainure ouverte (862), et une encoche (864) est réservée entre une extrémité inférieure de la patte (863) et un fond de rainure de la rainure ouverte (862) ; la patte (863) est insérée dans la cannelure (832), et un côté du corps de broche (861) opposé à la patte (863) est inséré dans la surface d'arc concave (91).
